# EUROPÄISCHE PATENTSCHRIFT

(11) **EP 2 945 842 B1**
(45) Veröffentlichungstag und Bekanntmachung des Hinweises auf die Patenterteilung: **01.03.2017**
(21) Anmeldenummer: 14706266.5
(22) Anmeldetag: 20.01.2014
(51) Int. Cl.: B62M 3/00, B62K 19/34

(54) **TRAININGSGERÄT**
TRAINING DEVICE
DISPOSITIF D'ENTRAÎNEMENT

(30) Priorität: 21.01.2013 AT 500332013
(43) Veröffentlichungstag der Anmeldung: 25.11.2015
(73) Patentinhaber: AIT Austrian Institute of Technology GmbH, 1220 Wien (AT)
(72) Erfinder: MEINDL, Michael, A-2632 Wimpassing (AT); LURF, Robert, A-2640 Gloggnitz (AT); OBERLEITNER, Andreas, A-2492 Zillingdorf (AT)
(74) Vertreter: Wildhack & Jellinek
(86) Internationale Anmeldenummer: PCT/AT2014/050018
(87) Internationale Veröffentlichungsnummer: WO 2014/110616

(56) Entgegenhaltungen:
- WO-A1-02/00305
- US-A- 4 793 208
- US-A- 6 085 613

## Beschreibung

Die Erfindung betrifft ein Trainingsgerät gemäß dem Oberbegriff des Anspruchs 1.

Aus dem Stand der Technik sind Kurbellager bekannt deren Kurbeln voneinander unabhängig drehbar gelagert sind. Die Kurbeln sind dabei jeweils auf einem separaten am Rahmen eines Trainingsgerätes oder Fahrzeuges befestigten Lagerzapfen gelagert. Die Lagerungen sind dabei sehr breit um die Kräfte in einer Loslager/Festlager Kombination aufnehmen zu können. Dadurch ergibt sich eine sehr große Bauweise die den Abstand der an den Kurbeln befestigten Pedale deutlich erhöht, mit dem Nachteil, dass die Verbauten Kurbellager meist sehr massiv und vor allem breit sind. Die an den Kurbelarmen angebrachten Pedale weisen daher einen großen Abstand zueinander auf und verändern den Hebelarm und die Druck-Kinematik in den Extremitäten der Nutzer. Dies führt dazu, dass Personen mit Gelenksproblemen Trainingsgeräte mit entkoppelten Kurbeln diese Geräte nicht Nutzen können bzw. gesunde Personen eine erhöhte Belastung ausgesetzt sind, die negative Auswirkungen auf den Bewegungsapparat haben kann.

Weiter ist aus der WO 2002/00305 A1 bekannt ein Schwungrad eines Trainingsgeräts mittels zweier separat gelagerter Kurbeln und zweier jeweils an den Kurbeln befestigter Ketten-räder und Ketten anzutreiben.

Aufgabe der Erfindung ist es daher ein schmales, klein bauendes Kurbellager mit zwei entkoppelten Kurbeln bereit zu stellen.

Die Erfindung löst diese Aufgabe bei einem Trainingsgerät der eingangs genannten Art mit den im Kennzeichen des Patentanspruchs 1 angegebenen Merkmalen. Es ist erfindungsgemäß vorgesehen, dass das Kurbellager einen Doppellagerbock mit einer Ausnehmung, eine Außenwelle mit einer zentralen Ausnehmung, wobei die Außenwelle in der Ausnehmung des Doppellagerbocks mittels einer ersten Lagerung gelagert ist, und eine Innenwelle, die mittels einer zweiten Lagerung in der Ausnehmung der Außenwelle gelagert ist, umfasst, wobei die Innenwelle, die Außenwelle und die Ausnehmung des Doppellagerbocks koaxial angeordnet sind und eine gemeinsame Drehachse aufweisen.

Die Lagerung der Innenwelle in der Außenwelle mit dem Doppellagerbock ermöglicht es den Abstand der einzelnen Lagerstellen breit auszuführen, um eine stabile und steife Befestigung der Kurbeln gegenüber dem Rahmen oder einem Gestell zu erreichen und gleichzeitig eine schmale Bauweise zu ermöglichen. Dadurch eignet sich der Einbau des Kurbellager besonders gut in Trainingsgeräten für die Rehabilitation in einer physikalischen Therapie und erreicht leichtere Fahrzeuge bei unabhängiger Verdrehbarkeit der Kurbeln.

Weitere vorteilhafte Ausgestaltungen der Trainingsgeräte werden in den Ansprüchen der abhängigen Merkmale beschrieben.

Um die an die Wellen eingeleiteten Kräfte und Drehmomente auf andere Elemente übertragen zu können ist vorgesehen, dass die Innenwelle und/oder die Außenwelle mit einem oder mehreren koaxialen, kraftübertragenden Elementen, insbesondere Kettenrädern und Riemenscheiben, kraftübertragend verbunden sind.

Um die Wellen in Bewegung zu setzen und Kräfte bzw. Drehmomente in die Wellen einzuleiten ist vorgesehen, dass die Innenwelle mit einer ersten Kurbel verbunden ist und die Außenwelle mit einer axial gegenüberliegenden zweiten Kurbel verbunden ist, wobei die Kurbeln an gegenüberliegenden Außenflächen der Wellen angeordnet sind.

Eine Übertragung von Drehmomenten und Kräften von einer Kurbel auf die andere ab einem bestimmten Winkelversatz kann erreicht werden, indem die Innenwelle und die Außenwelle rotationsabhängig gekoppelt sind, wobei die beiden Kurbeln mit einem relativen Winkelversatz, von zwischen 90° und 180°gegeneinender versetzt sind.

Eine einfache Einleitung von Kräften in die Kurbeln sieht vor, dass an der ersten Kurbel und der zweiten Kurbel Pedale, insbesondere Fahrradpedale oder Handpedale, befestigt sind.

Die Lagerung der Wellen ineinander bzw. im Doppellagerbock kann besonders reibungsarm und dadurch verlustarm erfolgen, wenn die erste und die zweite Lagerung als Radiallager, insbesondere als Lagerung mit Rillenkugellagern oder Gleitlagern, ausgebildet sind.

Die Verkippbarkeit der Wellen ineinander und im Doppellagerbock wird reduziert, wenn die erste Lagerung und die zweite Lagerung jeweils zumindest zwei Lagerstellen aufweisen.

Um den Einbau der Wellen ineinander und der Lager zu erleichtern ist vorgesehen, dass die Lagerstellen der ersten Lagerung und der zweiten Lagerung mit unterschiedlichem radialem Abstand von der Drehachse in einer oder mehrere zur Drehachse senkrecht stehenden Ebene angeordnet sind.

Ein besonders schmales Kurbellager wird erreicht, indem die Lagerabstände der Lagerstellen der Lagerungen zwischen 5 cm und 20 cm betragen und/oder dass die Breite des Kurbellagers zwischen 5 cm und 20 cm beträgt.

Eine Verwendung des Kurbellagers in einem Trainingsgerät sieht vor, dass ein Trainingsgerät, insbesondere ein Fahrradergometer, ein erfindungsgemäßes Kurbellager, sowie Elemente zur Krafteinleitung, insbesondere Pedale oder Manuale, umfasst.

Ein besonders effizientes Trainingsgerät mit einem erfindungsgemäßen Kurbellager kann erzeugt werden, wenn die kraftübertragenden Elemente über Getriebe, insbesondere Zugmittelgetriebe, mit mindestens einem energieabführendem Element, insbesondere ein Schwungrad mit Magnetbremse und/oder einem energiezuführenden Element, insbesondere einem Motor, energieübertragend verbunden sind.

Ein Fahrzeug mit unabhängig drehbaren Kurbelarmen kann bereitgestellt werden, wenn das Fahrzeug, insbesondere Fahrrad, ein erfindungsgemäßes Kurbellager, sowie Elemente zur Krafteinleitung, insbesondere Pedale oder Manuale, umfasst.

Ein Fahrzeug mit einer vorteilhaften Übersetzung kann bereitgestellt werden, indem die kraftübertragenden Elemente über Getriebe, insbesondere Zugmittelgetriebe, mit mindestens einem energieabführendem Element, insbesondere mit einem Antriebsrad, verbunden sind.

Weitere Vorteile und Ausgestaltungen ergeben sich aus der Beschreibung und den beiliegenden Zeichnungen.

Eine bevorzugte Ausführungsform der Erfindung ist in den Zeichnungen Fig. 1 bis Fig. 4 schematisch dargestellt und wird im Folgenden unter Bezugnahme auf die Zeichnungen beispielsweise beschrieben.

Es zeigen schematisch
- **Fig. 1**: ein Kurbellager in Frontansicht,
- **Fig. 2**: ein Kurbellager im Vollschnitt A-A,
- **Fig. 3**: ein Fahrradergometer mit erfindungsgemäßem Kurbellager und
- **Fig. 4**: ein Fahrrad mit erfindungsgemäßem Kurbellager.

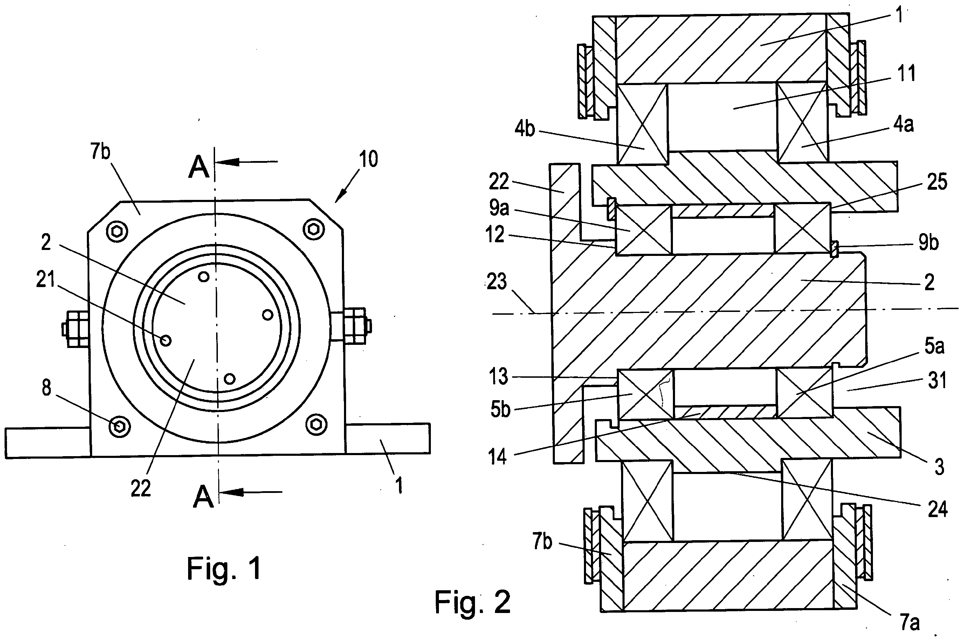

**Fig. 1** zeigt eine Frontansicht eines erfindungsgemäßen Kurbellagers 10 mit einem Doppellagerbock 1. Der Doppellagerbock 1 ist in stehender Form ausgeführt. Der Doppellagerbock 1 umfasst zwei Lagerdeckel 7a und 7b (Fig. 2), die durch Lagerschrauben 8 an dem Doppellagerbock 1 befestigt sind. Weiters zeigt **Fig. 1** eine Innenwelle 2 mit Bohrungen 21 an einem Flansch 22 zur Montage von Kurbeln 6a und 6b.

Eine erfindungsgemäße Ausführung des Kurbellagers 10 zeigt **Fig. 2** in einer Schnittansicht entlang der Achsen A-A **(****Fig. 1****).** Eine Außenwelle 3 ist über eine Lagerung 4, in einer Ausnehmung 11 des Doppellagerbocks 1, mit dem Doppellagerbock 1 des Kurbellagers 10 gelagert. Dabei sind die Rillenkugellager 4a und 4b an einer Wellenschulter 24 der Außenwelle 3 abgestützt und mit den Lagerdeckeln 7a und 7b schwimmend gelagert. Die Lagerdeckel 7a und 7b stützen die Außenringe der Rillenkugellagerlager 4a und 4b ab und über Schrauben 8 **(****Fig. 1****)** wird die Lagerung 4 vorgespannt wodurch die Außenwelle 3 axial gesichert ist. Die Innenwelle 2 ist hier als Vollwelle ausgebildet und besitzt an einer der Stirnseiten einen Flansch 22. Die Lagerung 5 der Innenwelle 2 in der Ausnehmung 31 der Außenwelle 3 ist durch zwei Radiallager, hier Rillenkugellager 5a und 5b, ausgeführt. Die Rillenkugellager 5a und 5b sind über eine Wellenschulter 13 der Innenwelle 2, die Außenwelle 3, eine Distanzhülse 14, zwei Sicherungsringe 9a und 9b und eine Wellenschulter 25 der Außenwelle 3 schwimmend gelagert. Dadurch ist die Innenwelle 2 relativ zur Außenwelle 3 in axialer Richtung gesichert. Durch die Lagerung 5 der Innenwelle 2 zusammen mit der Lagerung 4 der Außenwelle 3 im Doppellagerbock 1 können die Axial- und Radialkräfte aufgenommen werden und eine Rotation mit unterschiedlichen Winkelgeschwindigkeiten, der beiden Wellen 2 und 3, ermöglicht werden. Die Lagerstellen der ersten Lagerung 4 und der zweiten Lagerung 5 sind im unterschiedlichem radialen Abstand von der Drehachse 23 gesehen übereinander angeordnet. Der Lagerabstand, der Abstand zwischen den Lagerstellen der Lagerungen 4 und 5, ist zwischen 5cm und 20 cm und in dieser Ausführungsform 12 cm- Das Kurbellager besitz dabei eine Breite zwischen 5 cm und 20 cm und in dieser Ausführungsform eine Breite von 15 cm.

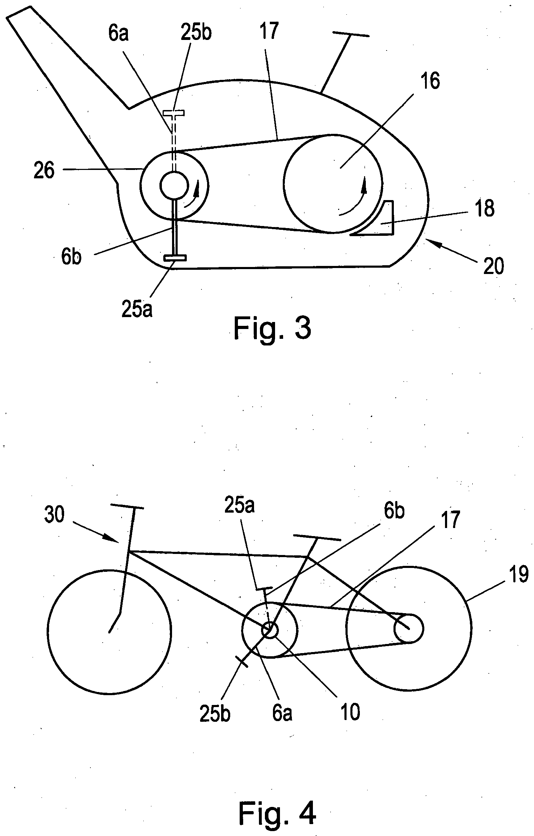

**Fig. 3** und **Fig. 4** zeigen jeweils eine Anwendung des Kurbellagers 10 in einem Trainingsgerät 20 bzw. einem Fahrrad 30. In **Fig. 3** ist ein Trainingsgerät 20 als Fahrradergometer dargestellt. Dabei werden die von der Trainingsperson aufgebrachten Kräfte über die Pedale 25a und 25b und die Kurbeln 6a und 6b an die Innenwelle 2 bzw. die Außenwelle 3 übertragen. Über ein Zugmittelgetriebe 17, zwei an den Wellen 2 und 3 befestigte Riemenscheiben 26a und 26b und darauf laufenden Riemen, wird die Winkelgeschwindigkeit und das Drehmoment an ein Schwungrad 16 übertragen. Auf das Schwungrad 16 wird mittels einer Bremse 18, z.B.: einer Magnetbremse, ein einstellbares Drehmoment aufgebracht und dadurch ein durch die Trainingsperson zu überwindender Wiederstand eingeleitet.

Eine Anwendung des Kurbellagers 10 ist in **Fig. 4** dargestellt. **Fig. 4** zeigte ein Fahrrad 30 mit dem erfindungsgemäßem Kurbellager 10 und daran befestigten Kurbeln 6a und 6b. An den Kurbeln sind Pedale 25a und 25b befestigt. Die Kraftübertragung der an den Pedalen 25a und 25b eingeleiteten Kräfte erfolgt über die Kurbeln 6a und 6b an die Innenwelle 2 und die Außenwelle 3. Über ein Zugmittelgetriebe 17, hier Kettenräder mit Ketten wird das Drehmoment der Innenwelle 2 und der Außenwelle 3 an ein energieabführendes Element 16, bei dieser Ausführungsform ein Antriebsrad 19, übertragen und abgeführt.

Alternativ kann ein Trainingsgerät 20 oder Fahrrad 30 ausgeführt sein, bei dem die Krafteinleitung in die Kurbeln 6a und 6b und die Innenwelle 2 bzw. Außenwelle 3 anstelle von mit Pedalen 25a und 25b die Kraftübertragung über Manuale, Handkurbeln, erfolgt.

Anstelle der Riemenscheiben 26a und 26b können auch Kettenräder mit Ketten zur Kraftübertragung zwischen den Wellen 2 und 3 und energieabführenden Elementen 16, wie einem Schwungrad oder einem Antriebsrad 19, an der Innenwelle 2 und Außenwelle 3 ausgeführt sein. Ebenso können die Kurbeln 6a und 6b miteinander rotationsabhängig gekoppelt sein. Dabei ist zum Beispiel der Winkelversatz der Innenwelle 2 mit der Außenwelle 3 bei einem relativen Winkelversatz zwischen 90° und 180° begrenzt und die Innenwelle 2 wird durch die Außenwelle 3, zum Beispiel über einen Fortsatz, mitgenommen. Dadurch kann eine Kraftübertragung zwischen den Kurbeln 6a und 6b und den daran befestigten Pedalen oder Manualen bewirkt werden, um Personen in der Rehabilitation zu unterstützen und den Bewegungsablauf der Extremitäten zu harmonisieren.

Die Lagerungen 4 und 5 der in **Fig. 1** und **Fig. 2** beschriebenen Ausführungsform können alternativ zu den Rillenkugellager 4a; 4b und 5a; 5b auch durch andere Lagerformen, wie Gleitlager oder andere Wälzlager, wie Tonen - oder Kegelrollenlager oder aus Kombinationen einzelner Lagerformen, ausgeführt werden.

## Patentansprüche

1. Trainingsgerät (20), insbesondere Fahrradergometer, umfassend ein Kurbellager (10) mit voneinander unabhängig drehbaren Kurbeln,
- wobei das Trainingsgerät (20) Elemente zur Krafteinleitung (25a, 25b), insbesondere Pedale oder Manuale umfasst,
- und wobei die kraftübertragenden Elemente (26) über Getriebe mit mindestens einem energieabführendem Element (16), und/oder einem energiezuführenden Element energieübertragend verbunden sind,
**dadurch gekennzeichnet, daß**
- ein Doppellagerbock (1) mit einer Ausnehmung (11), eine Außenwelle (3) mit einer zentralen Ausnehmung (31), wobei die Außenwelle (3) in der Ausnehmung (11) des Doppellagerbocks (1) mittels einer ersten Lagerung (4) gelagert ist, und eine Innenwelle (2), die mittels einer zweiten Lagerung (5) in der Ausnehmung (31) der Außenwelle (3) gelagert ist, vorgesehen ist, wobei die Innenwelle (2), die Außenwelle (3) und die Ausnehmung (11) des Doppellagerbocks (1) koaxial angeordnet sind und eine gemeinsame Drehachse (23) aufweisen,
- wobei die Innenwelle (2) und/oder die Außenwelle (3) mit einem oder mehreren koaxialen, kraftübertragenden Elementen (26), insbesondere Kettenrädern und Riemenscheiben, kraftübertragend verbunden sind.

2. Trainingsgerät (20) nach Anspruch 1, **dadurch gekennzeichnet, dass** die Innenwelle (2) mit einer ersten Kurbel (6a) verbunden ist und die Außenwelle (3) mit einer axial gegenüberliegenden zweiten Kurbel (6b) verbunden ist, wobei die Kurbeln (6a,6b) an gegenüberliegenden Außenflächen der Wellen (2, 3) angeordnet sind.

3. Trainingsgerät (20) nach Anspruch 2, **dadurch gekennzeichnet, dass** die Innenwelle (2) und die Außenwelle (3) rotationsabhängig gekoppelt sind, wobei die beiden Kurbeln (6a, 6b) mit einem relativen Winkelversatz, von zwischen 90° und 180° gegeneinender versetzt sind.

4. Trainingsgerät (20) nach einem der Ansprüche 2 oder 3, **dadurch gekennzeichnet, dass** an der ersten Kurbel (6a) und der zweiten Kurbel (6b) Pedale (25a, 25b), insbesondere Fahrradpedale (25a, 25b) oder Handpedale, befestigt sind.

5. Trainingsgerät (20) nach einem der Ansprüche 1 bis 4, **dadurch gekennzeichnet, dass** die erste und die zweite Lagerung (4, 5) als Radiallager, insbesondere als Lagerung mit Rillenkugellagern (4a, 4b; 5a, 5b) oder Gleitlagern, ausgebildet sind.

6. Trainingsgerät (20) nach einem der Ansprüche 1 bis 5, **dadurch gekennzeichnet, dass** die erste Lagerung (4) und die zweite Lagerung (5) jeweils zumindest zwei Lagerstellen aufweisen.

7. Trainingsgerät (20) nach einem der Ansprüche 1 bis *6,* **dadurch gekennzeichnet, dass** die Lagerstellen der ersten Lagerung (4) und der zweiten Lagerung (5) mit unterschiedlichem radialem Abstand von der Drehachse (23) in einer oder mehrere zur Drehachse (23) senkrecht stehenden Ebene angeordnet sind.

8. Trainingsgerät (20) nach einem der Ansprüche 1 bis 7, **dadurch gekennzeichnet, dass** die Lagerabstände der Lagerstellen der Lagerungen (4, 5) zwischen 5 cm und 20 cm betragen (4; 5) und/oder dass die Breite des Kurbellagers zwischen 5 cm und 20 cm beträgt.

9. Trainingsgerät (20) nach einem der vorangehenden Ansprüche, **dadurch gekennzeichnet, dass** die kraftübertragenden Elemente (26a, 26b) über Zugmittelgetriebe (17), mit mindestens einem energieabführendem Element (16) energieübertragend verbunden sind.

10. Trainingsgerät (20) nach einem der vorangehenden Ansprüche, **dadurch gekennzeichnet, dass** das mindestens einem energieabführendem Element (16) als Schwungrad (16) mit Magnetbremse (18) ausgebildet ist und/oder dass das energiezuführenden Element einen Motor umfasst.

## Claims

1. Training device (20), in particular a bicycle ergometer, comprising a crank bearing (10) with cranks which are rotatable independently of each other,
- the training device (20) comprises elements for force application (25a; 25b), in particular through foot or hand operated pedals,
- and wherein the force-transmitting elements (26) are connected via a gear to at least one energy-dissipating element (16) and/or an energy-supplying element,
**characterized in that**
- a double bearing block (1) with a recess (11) and an outer shaft (1) with a central recess (31) is provided, wherein the outer shaft (3) is supported in the recess (11) of the double bearing block (1) by means of a first bearing (4), and wherein an inner shaft (2) is supported by means of a second bearing (5) in the recess (31) of the outer shaft (3), wherein the inner shaft (2), the outer shaft (3) and the recess (11) of the double bearing block (1) are arranged coaxially and have a common axis of rotation (23),
- the inner shaft (2) and/or the outer shaft (3) are connected in a force-transmitting manner to one or more coaxial force-transmitting elements (26), in particular chain wheels and pulleys.

2. Training device (20) according to claim 1,
**characterized in that**
the inner shaft (2) is connected to a first crank (6a) while the outer shaft (3) is connected to an axially-opposite second crank (6b), wherein the cranks (6a, 6b) are arranged on opposite outer surfaces of the shafts (2, 3).

3. Training device (20) according to claim 2,
**characterized in that**
the inner shaft (2) and the outer shaft (3) are connected in a rotation-dependent manner, wherein the two cranks (6a, 6b) are offset with respect to one another by an angle between 90° and 180°.

4. Training device (20) according to claim 2 or 3,
**characterized in that**
pedals (25a, 25b), in particular bicycle pedals (25a, 25b) or hand-operated pedals, are fastened to the first crank (6a) and the second crank (6b).

5. Training device (20) according to claim 1 to 4,
**characterized in that**
the first and the second bearings (4, 5) are designed as radial bearings, in particular as bearings with deep groove ball bearings (4a, 4b: 5a. 5b) or plain bearings.

6. Training device (20) according to claim 1 to 5,
**characterized in that**
the first bearing (4) and the second bearing (5) each have at least two bearing points.

7. Training device (20) according to claim 1 to 6,
**characterized in that**
the bearing points of the first bearing (4) and the second bearing (5) are arranged at different radial distances from the axis of rotation (23) in one or more planes perpendicular to the axis of rotation (23).

8. Training device (20) according to claim 1 to 7,
**characterized in that**
the distances of the bearing points of the bearings (4, 5) are between 5 cm and 20 cm (4; 5) and/or the width of the crank bearing is between 5 cm and 20 cm.

9. Training device (20) according to one of the preceding claims,
**characterized in that**
the force-transmitting elements (26a, 26b) are connected in an energy-dissipating manner to at least one energy-dissipating element (16) via a gear (17).

10. Training device (20) according to one of the preceding claims,
**characterized in that**
the at least one energy-dissipating element (16) is designed as a flywheel (16) with a magnetic brake (18) and/or that the energy-supplying element comprises a motor.

## Revendications

1. Appareil d'entraînement (20), plus particulièrement ergomètre de bicyclette, comprenant un palier de vilebrequin (10) avec des vilebrequins tournant indépendamment,
- l'appareil d'entraînement (20) comprenant des éléments d'application d'une force (25a, 25b), plus particulièrement des pédales ou des pédales à main,
- et les éléments (26) transmettant les forces étant reliés, avec une transmission d'énergie, par l'intermédiaire d'un engrenage (16) d'évacuation de l'énergie et/ou d'un élément d'alimentation en énergie
**caractérisé en ce que**
- un chevalet à double palier (1) avec un évidement (11), un arbre externe (3) avec un évidement central (31), l'arbre externe (3) étant logé dans l'évidement (11) du chevalet à double palier (1), au moyen d'un palier (4), et un arbre interne (2), qui est logé au moyen d'un deuxième palier (5) dans l'évidement (31) de l'arbre externe (3), est prévu, l'arbre interne (2), l'arbre externe (3) et l'évidement (11) du chevalet à double palier (1) étant disposés de manière coaxiale et comprenant un axe de rotation (23) commun,
- l'arbre interne (2) et/ou l'arbre externe (3) étant reliés avec un ou plusieurs éléments coaxiaux (26) de transmission de force, plus particulièrement des roues dentées et des poulies, avec une transmission de force.

2. Appareil d'entraînement (20) selon la revendication 1, **caractérisé en ce que** l'arbre interne (2) est relié avec un premier vilebrequin (6a) et l'arbre externe (3) est relié avec un deuxième vilebrequin (6b) axialement opposé, les vilebrequins (6a, 6b) étant disposés sur des faces externes opposées des arbres (2, 3).

3. Appareil d'entraînement (20) selon la revendication 2, **caractérisé en ce que** l'arbre interne (2) et l'arbre externe (3) sont couplés en fonction de la rotation, les deux vilebrequins (6a, 6b) étant décalés l'un par rapport à l'autre avec un décalage angulaire entre 90° et 180°.

4. Appareil d'entraînement (20) selon l'une des revendications 2 ou 3, **caractérisé en ce que**, sur le premier vilebrequin (6a) et sur le deuxième vilebrequin (6b), sont fixées des pédales (25a, 25b), plus particulièrement des pédales de bicyclettes (25a, 25b) ou des pédales à mains.

5. Appareil d'entraînement (20) selon l'une des revendications 1 ou 4, **caractérisé en ce que** le premier et le deuxième palier (4, 5) sont conçus comme des paliers radiaux, plus particulièrement comme un palier avec des paliers à rainures à billes rainurées (4a, 4b ; 5a, 5b) ou des paliers lisses.

6. Appareil d'entraînement (20) selon l'une des revendications 1 ou 5, **caractérisé en ce que** le premier palier (4) et le deuxième palier (5) comprennent chacun au moins deux points d'appui.

7. Appareil d'entraînement (20) selon l'une des revendications 1 ou 6, **caractérisé en ce que** les points d'appui du premier palier (4) et du deuxième palier (5) sont disposés à une distance radiale différente par rapport à l'axe de rotation (23) dans un ou plusieurs plans perpendiculaires à l'axe de rotation (23).

8. Appareil d'entraînement (20) selon l'une des revendications 1 ou 7, **caractérisé en ce que** les distances entre les points d'appui des paliers (4, 5) sont de 5 cm à 20 cm (4 ; 5) et/ou **en ce que** la largeur du palier à vilebrequin est de 5 cm à 20 cm.

9. Appareil d'entraînement (20) selon l'une des revendications précédentes, **caractérisé en ce que** les éléments de transmission de force (26a, 26b) sont reliés par l'intermédiaire d'engrenages de traction (17), avec au moins un élément d'évacuation d'énergie (16), avec une transmission d'énergie.

10. Appareil d'entraînement (20) selon l'une des revendications précédentes, **caractérisé en ce que** l'au moins un élément d'évacuation d'énergie (16) est conçu comme un volant d'inertie (16) avec un frein magnétique (18) et/ou **en ce que** l'élément d'alimentation en énergie comprend un moteur.
